(19) Europäisches Patentamt / European Patent Office / Office européen des brevets

(11) **EP 3 678 474 B1**

(12) **EUROPÄISCHE PATENTSCHRIFT**

(45) Veröffentlichungstag und Bekanntmachung des Hinweises auf die Patenterteilung:
**14.07.2021  Patentblatt 2021/28**

(51) Int Cl.:
***A01J 5/007*** *(2006.01)*

(21) Anmeldenummer: **18765867.9**

(22) Anmeldetag: **06.09.2018**

(86) Internationale Anmeldenummer:
**PCT/EP2018/073948**

(87) Internationale Veröffentlichungsnummer:
**WO 2019/048521 (14.03.2019 Gazette 2019/11)**

(54) **VERFAHREN ZUR REDUZIERUNG DER TIERINDIVIDUELLEN MILCHPRODUKTION VON MILCHGEBENDEN TIEREN**

METHOD FOR REDUCING THE INDIVIDUAL-SPECIFIC MILK PRODUCTION OF MILK-PRODUCING ANIMALS

PROCÉDÉ DE RÉDUCTION DE LA PRODUCTION INDIVIDUELLE DE LAIT D'ANIMAUX LAITIERS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.09.2017   DE 102017120656**

(43) Veröffentlichungstag der Anmeldung:
**15.07.2020   Patentblatt 2020/29**

(73) Patentinhaber: **GEA Farm Technologies GmbH**
**59199 Bönen (DE)**

(72) Erfinder:
• **SCHMIDT, Susanne**
**59759 Arnsberg (DE)**
• **LINIUS, Brigitte**
**59320 Ennigerloh-Ostenfelde (DE)**
• **MAASSEN-FRANCKE, Beate**
**59302 Oelde (DE)**
• **MÜLLER, Ute**
**56598 Rheinbrohl (DE)**
• **BÜSCHER, Wolfgang**
**53125 Bonn (DE)**
• **MARTIN, Lisett Marie**
**53844 Troisdorf (DE)**

(74) Vertreter: **Neumann, Ditmar**
**KEENWAY Patentanwälte Neumann**
**Heine Taruttis PartG mbB**
**Postfach 103363**
**40024 Düsseldorf (DE)**

(56) Entgegenhaltungen:
**EP-A2- 1 125 492     WO-A1-2006/068568**

**Beschreibung**

Der Gegenstand der Erfindung bezieht sich auf Verfahren zum Melken eines Milch abgebenden Tiers, insbesondere einer Kuh, sowie auf eine zur Durchführung des Verfahrens geeignete und bestimmte Vorrichtung.

Obwohl im Folgenden die Erfindung in Verbindung mit einer Melkanlage zum Melken von Kühen beschrieben wird, wird darauf hingewiesen, dass sich der Gegenstand der Erfindung, insbesondere auch auf Verfahren und Vorrichtungen zum Melken von Schafen, Ziegen, Lamas, Kamelen, Dromedaren, Büffeln, Stuten, Eseln, Yaks sowie anderen Milch abgebenden Tieren eignet. Die Erfindung kann sowohl bei robotergestützten Melkanlagen als auch bei vollautomatischen, halbautomatischen oder konventionellen Melkanlagen verwendet werden.

Sowohl beim traditionellen Handmelken, welches ein Druckmelken ist, als auch bei maschinellen Saugmelkverfahren wird die gesamte im Euter befindliche Milch ermolken, um maximalen Ertrag zu erhalten und um das Euter zur weiteren Milchproduktion anzuregen.

Bei maschinellem Melken besteht die Gefahr, dass Zitzen zu lange gemolken werden, obwohl kein Milchfluss mehr vorhanden ist. Oder die Zitze ist verdreht oder abgeknickt und gibt gar keine Milch frei. Oder die milchführenden Kanäle der Zitzen werden durch ungünstige Umstände zu früh verschlossen. Es ist bekannt, dass bei einem zu starken Ausmelken es zu einer Beeinträchtigung der Zitzenkonditionen kommen kann. Insbesondere besteht die Gefahr der Hyperkeratosen (Strichkanalausspülungen).

Es sind unterschiedliche Verfahren bekannt, um solche negativen Auswirkungen beim vollständigen Ausmelken zu verhindern. So schlägt zum Beispiel die DE 36 09 275 A1 vor, dass die zeitliche Änderung der Milchmenge und/oder des Milchflusses innerhalb einzelner Pulszyklen charakteristische Besonderheiten aufweist, die bewertet werden können. Damit können Melkparameter über die Steuerung angepasst oder das Melkende bestimmt werden, so dass die Melksteuerung die Melkzeugabnahme ausführen kann. Durch die EP 0 534 565 B1 ist ein Verfahren zum automatischen Melken bekannt, das mittels Strömungssensoren den Milchfluss aus den einzelnen Zitzen überwacht und bei Versiegen des Milchflusses das Melken der Zitze beendet. In der DE 28 44 562 B1 ist ein weiteres Verfahren zum vollständigen Ausmelken bei maschinellem Milchentzug beschrieben. Wenn der Milchfluss unter eine bestimmte Schwelle sinkt, wird die Abnahme des Melkzeugs bewirkt.

Durch WO 2006/068568 A1 ist bekannt, dass ein Melkvorgang beendet wird, wenn die aktuelle Milchmenge einen Grenzwert erreicht hat, wobe der Grenzwert auf der Basis früherer Melkungen bestimmt wird.

Im Hinblick darauf, dass sich der Melkertrag und die Milchzusammensetzung im Laufe einer Laktation verändert, wird eine Kuh zur Vorbereitung auf die folgende Laktation trockengestellt. Unter einem Trockenstellen wird der Übergang aus der laktierenden Phase in eine nicht laktierende Phase verstanden. Während der Trockenstellperiode erfolgt im Wesentlichen kein Milchentzug, da dem Tier die Möglichkeit gegeben werden soll, eine Regeneration der Reserven für den nächsten Laktationsstart zu erreichen.

Es ist festgestellt worden, dass insbesondere bei Tieren mit hoher Milchleistung und hoher Tagesmelkleistung zum Zeitpunkt des Trockenstellens eine Neuinfektionsrate mit Mastitis sehr hoch sein kann (Volker Krömker; Kurzes Lehrbuch Milchkunde und Milchhygiene; Parey in MVS Medizinverlage Stuttgart; 2007). Um das Risiko für die Eutergesundheit zu verringern, kommen antibiotische Langzeitpräparate, die auch als sogenannte Trockensteller bekannt sind, zum Einsatz. Durch die Verwendung von insbesondere antibiotischer Langzeitpräparate, die auch präventiv Tieren gegeben werden, können Eutergesundheitsprobleme zumindest verringert werden.

Andererseits ist Rohmilch ein bedeutsames Lebensmittel und ein wichtiger Rohstoff für die Nahrungsmittelindustrie. Zum Schutz des Verbrauchers, zur technischen Verarbeitungsfähigkeit sowie zur Marktlenkung muss Rohmilch sowohl nationalen als auch internationalen Qualitätsanforderungen genügen. Wird ein Tier medikamentös behandelt, so darf die Milch des Tiers während der medikamentösen Behandlung und innerhalb einer vorgegebenen Zeitspanne nach dem Ende der medikamentösen Behandlung nicht als verkehrsfähige Milch klassifiziert werden. Außerdem fördert der verbreitete Einsatz von Antibiotika Resistenzen bei Bakterienstämmen in der gesamten Umwelt.

Durch EP 1 125 492 A2 ist bekannt, dass ein Tier zu Beginn einer nächsten Laktationsperiode nicht vollständig gemolken werden soll. Hierzu wird vorgeschlagen, dass basierend auf historischen Daten einer früheren Laktationsperiode die Milchleistung und / oder Melkzeit, die zu Beginn einer neuen Laktationsperiode in der ersten Melkrunde (n) zu erwarten ist, bestimmt wird. Vor der erwarteten Milchleistung oder Melkzeit, je nachdem wird der Melkvorgang beendet. So soll verhindert werden, dass im Anfangsstadium der Laktationsperiode dem Tier zu viel Kalzium entzogen wird, was zu Krankheiten wie "Milchkrankheit" (Schwächung der Muskeln) führen kann.

Hiervon ausgehend liegt der vorliegenden Erfindung die Zielsetzung zugrunde, ein verbessertes Verfahren zum Melken eines Milch gebenden Tiers, insbesondere einer Kuh, anzugeben.

Diese Aufgabe wird durch ein Verfahren zum Melken eines Milch abgebenden Tiers, insbesondere einer Kuh, mit den Verfahrensschritten gemäß Patentanspruch 1 gelöst. Weitere vorteilhafte Ausgestaltungen und Ausführungen des Verfahrens sind in den abhängigen Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Varianten der Erfindung aufgezeigt werden.

Nach dem erfindungsgemäßen Verfahren zum Melken eines Milch abgebenden Tiers, insbesondere einer Kuh, wird vorgeschlagen, dass eine Zielmilchmenge bestimmt wird. Die Zielmilchmenge ist dabei geringer als eine mögliche zu erwartende Milchmenge. Während des Melkvorgangs wird die ermolkene Milchmenge ermittelt. Es findet ein Vergleich zwischen der ermolkenen Milchmenge und der Zielmilchmenge statt. Der Melkvorgang wird beendet, wenn die ermolkene Milchmenge im Wesentlichen der Zielmilchmenge entspricht. Dies kann durch eine automatische Abnahmesteuerung erfolgen oder manuell durch Melkpersonal, das den maschinellen Melkvorgang beaufsichtigt oder Handmelken ausführt.

Durch dieses erfindungsgemäße Verfahren wird insbesondere eine schonende Behandlung der Zitzen eines Tiers, insbesondere einer Kuh, erreicht.

Das Verfahren ist vorteilhaft im Zusammenhang mit der Einleitung einer Trockenstellperiode einer Kuh. So wird erfindungsgemäß vorgeschlagen, dass ein Beginntag, der vor einem Trockenstelltag liegt, bestimmt wird und von dem an der Melkvorgang beendet wird, wenn eine Zielmilchmenge ermolken wurde. Durch diese Ausgestaltung des Verfahrens wird eine Involution der Milchdrüse aktiv eingeleitet. Durch diesen aktiven Vorgang vereinfacht sich die Trockenstellung des Milch gebenden Tiers, insbesondere kann im Wesentlichen auf die Verwendung antibiotischer Trockenstellpräparate verzichtet werden.

Vorzugsweise wird die Zielmilchmenge zumindest für den Beginntag aus historischen Daten ermittelt. Es ist bekannt, dass moderne Milchviehbetriebe über ein Herdenmanagementsystem verfügen. In dem Managementsystem sind zahlreiche Daten hinterlegt, die einzelnen Tieren oder Tiergruppen zugeordnet werden. Verfügt der Milchviehbetrieb über ein solches Herdenmanagementsystem, so stehen insbesondere tierindividuelle Daten zur Verfügung. Hierbei kann es sich um Daten handeln, aus denen erkennbar ist, welchen Milchertrag ein Tier an einem bestimmten Laktationstag abgegeben hat. Auf der Basis eines solchen Datensatzes mit den historischen Daten kann die Zielmilchmenge zumindest für den Beginntag ermittelt werden. Die historischen Daten enthalten vorzugsweise sämtliche für das Melken relevanten Daten.

Es besteht auch die Möglichkeit, dass die Zielmilchmenge zumindest für den Beginntag aus historischen Daten ermittelt wird, wobei hier die historischen Daten nicht zwingend tierindividuell sein müssen. Die Milchmenge, welche ein Tier einer bestimmten Rasse, physischer Kondition etc. abgibt, ist an und für sich geläufig und kann als Basis für die Bestimmung oder Ermittlung der Zielmilchmenge für den Beginntag postuliert werden. Wird ein Tier nach dem erfindungsgemäßen Verfahren während einer Laktation gemolken, so werden diese Daten, insbesondere die Milcherträge pro Melkvorgang bzw. pro Melkertrag, gespeichert. Diese gespeicherten Daten stellen auch historische Daten dar. Wird das Tier nach dem erfindungsgemäßen Verfahren in einer weiteren Laktation gemolken, so kann auf die historischen Daten aus zumindest einer vorhergehenden Laktation zurückgegriffen werden. Ggf. wird eine Korrektur der historischen Daten durchgeführt in Abhängigkeit davon, in welcher Laktation sich das Tier befindet. Ist bspw. bekannt, dass der Milchertrag während der Laktation nach der zweiten, dritten oder weiteren Kalbung stets abnimmt, so kann eine Korrelation zwischen den historischen Daten und den weiteren Kalbungen bzw. weiteren Laktationen gestellt werden, um die als erwartete im Euter befindliche Milchmenge genauer zu schätzen bzw. die reduzierte Zielmilchmenge genauer zu berechnen.

Wird das Verfahren bei einem Tier durchgeführt, welches nach der ersten Kalbung laktierend ist, so wird auf historische Daten vergleichbarer Tiere zurückgegriffen.

Bei den historischen Daten kann es sich auch Daten handeln, die sich auf vorangegangene Melkvorgänge der aktuellen Laktation beziehen.

Die Zielmilchmenge wird vorzugsweise für jeden einzelnen Melkvorgang bestimmt, von denen jedes Tier in der Regel mehrere pro Tag hat. Diese Vorgehensweise ist insbesondere dann vorteilhaft, wenn das Tier zu exakt vorgegebenen Tageszeiten gemolken wird.

Wird das Tier in einem Milchviehbetrieb gehalten, in dem ein freier Tierverkehr praktiziert wird, so ist es vorteilhaft, wenn die Zielmilchmenge für jeden Tag festgelegt wird. Beim freien Tierverkehr ist nicht sichergestellt, dass ein Tier an jedem Tag zum gleichen Zeitpunkt gemolken wird. Dies ist insbesondere dann der Fall, wenn robotergestützte Melkeinrichtungen freiwillig von den Tieren aufgesucht werden können. Ist dies der Fall, so ändert sich je nach Zeitabstand zwischen zwei aufeinanderfolgenden Melkvorgängen die zur Verfügung stehende Milchmenge im Euter.

Auch bei einem gelenkten Tierverkehr mit geplanten Melkzeiten, die jeweils nur ein Zeitfenster vorher bestimmen, lässt sich der Zeitpunkt für einen Melkvorgang eines bestimmten Tieres nicht genau vorhersagen. Dann ist es ebenfalls vorteilhaft, wenn die Zielmilchmenge für jeden Tag festgelegt wird.

Vorteilhafterweise wird die Zielmilchmenge für einen ganzen Tag nach verschiedenen Anwendungsfällen und Verfahren ermittelt und daraus eine Zielmilchmenge für einen einzelnen Melkvorgang abgeleitet. Dies ist, insbesondere beim freien Tierverkehr oder bei Angabe einer Melkzeit als Zeitfenster, zu bevorzugen. Wird die Zielmilchmenge (ZMM) für ein einzelnes Melken auf der Basis einer Tages-Zielmilchmenge (TZM) bestimmt, so ist es vorteilhaft, wenn der zeitliche Abstand (S) zwischen zwei aufeinanderfolgenden Melkvorgängen berücksichtigt wird. So kann bspw. die Zielmilchmenge aus dem Produkt der Tages-Zielmilchmenge und dem Quotienten aus der Zeit zwischen zwei aufeinanderfolgenden Melkvorgängen pro 24 Stunden berechnet werden. Für die Zielmilchmenge soll gelten:

$$ZMM = TZM * (S\,[h]\,/\,24[h])$$

Im Hinblick darauf, dass die Milchproduktion im Euter seit einem letzten Melken nicht unendlich steigen kann, wird vorgeschlagen, dass die Zeitdauer seit dem letzten Melkvorgang für die Berechnung der Zielmilchmenge für ein einzelnes Melken auf einen Maximalwert begrenzt wird. Eine solche Situation kann bspw. eintreten, wenn eine unvollständige Datenerfassung zu einem Tier erfolgt ist und der letzte aufgezeichnete Melkvorgang nicht der letzte tatsächliche Melkvorgang ist. Wird bspw. festgestellt, dass in Abhängigkeit von der geplanten Melkfrequenz, das heißt der Anzahl der Melkvorgänge pro 24 Stunden, ein vorgegebener Zeitabstand zu einem vorhergehenden bekannten Melkvorgang den Maximalwert weit überschreitet, so kann ein angenommener Zeitabstand zwischen zwei aufeinanderfolgenden Melkvorgängen zur Bestimmung der Zielmilchmenge pro Tag basierend auf der Tages-Zielmilchmenge herangezogen werden, wobei hier die geplante Melkfrequenz, das heißt die Anzahl der geplanten Melkungen pro Tag, berücksichtigt wird.

Bevorzugt wird hierbei von dem nachfolgend in der Tabelle wiedergegebenen Werten ausgegangen:

| Geplante Melkfrequenz | Zeitabstand zu einem letzten bekannten Melkvorgang | Angenommener Zeitabstand |
|---|---|---|
| 1 | 36h | 24h |
| 2 | 24h | 12h |
| 3 | 16h | 8h |
| 4 | 12h | 6h |

Soll bspw. entsprechend der Tabelle ein Tier zweimal am Tag gemolken werden (geplante Melkfrequenz), was einem angenommenen Zeitabstand von 12 Stunden pro Tag entspricht, und ist festgestellt worden, dass zwischen zwei aufeinanderfolgenden Melkvorgängen mehr als 24 Stunden vergangen sind, so wird für die Bestimmung der Zielmilchmenge für das anstehende Melken ein Zeitabstand zwischen zwei aufeinanderfolgenden Melkvorgängen von 12 Stunden angenommen, obwohl der tatsächliche Zeitabstand kleiner oder größer sein kann.

Diese Verfahrensführung ist insbesondere dann vorteilhaft, wenn vor einem Melkvorgang eine Identifikation des zu melkenden Tiers erfolgt.

Gemäß einer noch weiteren vorteilhaften Gestaltung des erfindungsgemäßen Verfahrens wird vorgeschlagen, dass der Beginntag für das Melken mit reduzierter Zielmilchmenge in Abhängigkeit vom geplanten Trockenstelltag eines Tieres festgelegt wird. Der geplante Trockenstelltag bestimmt sich tier-, betriebs- oder rassespezifisch aus der Anzahl der Tage seit dem Tag der Besamung bzw. des Deckvorgangs, für die in einer späteren Trächtigkeitsuntersuchung die Trächtigkeit festgestellt wurde. Der Beginntag für das Melken mit reduzierter Zielmilchmenge liegt eine bestimmte, tier-, betriebs- oder rassespezifische Anzahl Tage vor dem geplanten Trockenstelltag. Die Größe der Änderung der Zielmilchmenge kann an die Zeitspanne zwischen Beginntag und geplantem Trockenstelltag angepasst werden.

Insbesondere wird vorgeschlagen, dass die Zielmilchmenge eines Tages aus der Zielmilchmenge des vorigen Tages verringert um einen Änderungswert M bestimmt wird. Der zu verringernde Vortageswert am Beginntag selbst, im Folgenden als Referenzmenge bezeichnet, kann die durchschnittliche Tagesmilchleistung des Tieres sein, berechnet aus den Milchmengen historisch aufgezeichneter Melkvorgänge oder gemäß der bereits vorgestellten Verfahren zur Schätzung gemäß Laktationstag und - kurve oder Schätzverfahren, die frühere Laktationsleistungen oder vergleichbare Tiere benutzen. Alle Werte können auch zitzenindividuell bestimmt werden.

Der Änderungswert M kann ein konstanter Wert sein, der für jeden Tag subtrahiert wird. Vorzugsweise wird er durch einen Faktor K aus dem Vortageswert ermittelt bzw. am Beginntag aus der ermittelten Referenzmenge. Der Faktor K für eine Reduktion der Menge muss kleiner als 1 sein. Für später vorgestellte Anwendungen des Melkens mit begrenzter Zielmilchmenge, wo eine schrittweise Erhöhung gewünscht wird, kann er andere Werte haben. Änderungswert M oder Faktor K sind vorzugsweise konstant und einstellbar. Insbesondere wird vorgeschlagen, dass sie von einer Zeitspanne zwischen Beginntag und Trockenstelltag und/oder Laktationsstand abhängige Größen sind. Dadurch wird eine noch bessere Anpassung der Zielmilchmenge und der damit verbundenen angestrebten Involution der Milchdrüse erreicht. Die Reduktion kann auch andere Einflussfaktoren berücksichtigen, insbesondere auch die Rasse, Physiognomie und den tierindividuellen Gesundheitszustand. Die Anpassung kann linear oder asymptotisch auf einen bestimmten Zielwert hin erfolgen.

Gemäß einer noch weiteren vorteilhaften Weiterentwicklung des Verfahrens wird vorgeschlagen, dass zum Ende der Laktationsperiode hin das Tier wenigstens einem vollständigen Melkvorgang unterzogen wird. Hierdurch soll erreicht werden, dass am Trockenstelltag das Euter des Tiers auch tatsächlich vollständig ausgemolken wird.

Das erfindungsgemäße Verfahren ist nicht nur im Zusammenhang mit dem angestrebten Trockenstellen des Tiers von Vorteil, sondern es berücksichtigt auch, dass eine verbesserte Tiergesundheit und insbesondere eine verbesserte Energiebilanz erreicht werden kann. Es ist bekannt, dass das Tier für die Milchproduktion eine bestimmte Energie aufbringen muss. Um diese Energie bereitzustellen, werden dem Tier passende Nährstoffe in optimaler Menge zugeführt. Das Tier soll nicht zu fett werden, da es zu Schwierigkeiten bei der folgenden Kalbung kommen kann. Ein zu hoher Eiweißeintrag führt zu Stoffwechsel- und Gesundheitsproblemen des Tiers. Insbesondere bei hoher Milchleistung ist es bei einem raschen Anstieg der Milchproduktion, insbesondere nach der Kalbung in einem Frühstadium der Laktation, oft schwierig, ein Gleichgewicht zwischen einer adäquaten Fütterung und Milchproduktion herzustellen. Eine rasche Änderung der Futtermenge führt nicht zu dem gewünschten Ergebnis, da sich das Verdauungssystem stets an die geänderte Menge anpassen muss. Es besteht die Gefahr, dass es zu Verdauungserkrankungen kommt, wenn die Futtermenge zu hoch wird. Bei einem schnellen Anstieg der Milchproduktion entsteht daher ein Defizit an der zugeführten Energiemenge, und es besteht die Gefahr einer Ketose-Erkrankung.

Des Weiteren kann die Menge des konzentrierten Kraftfutters nicht beliebig erhöht werden, da das Verdauungssystem einen bestimmten Mindestanteil an Rohfasern im Verhältnis zur aufgenommenen Energiemenge benötigt, so dass es Grenzen durch das Volumen des Gesamtfutters gibt. Bei Kühen besteht daher die Gefahr, dass es zu einer negativen Energiebilanz kommt, was das Immunsystem und die Fruchtbarkeit beeinträchtigt.

Nach dem erfindungsgemäßen Verfahren besteht daher auch die Möglichkeit, den Anstieg der Milchproduktion insbesondere zum Anfang der Laktationsperiode zu beeinflussen. Liegt die Zielmilchmenge unterhalb der möglichen zu ermelkenden Milchmenge, so wird die Produktion reduziert. Der Anreiz für die Kuh, die Milchproduktion zu steigern, wird verringert, was sich positiv auf die Gesamtenergiebilanz und somit auch für die Tiergesundheit des Tiers auswirken kann.

Das erfindungsgemäße Verfahren kann auch für eine bestimmte Zeitspanne während der Laktationsperiode zum Einsatz kommen. Dadurch wird bspw. eine Drosselung der Milchproduktion während der Laktation erreicht. Die gezielte Drosselung der ermolkenen Milchmenge und damit einhergehenden Reduktion der Milchproduktion bei dem Tier ist insbesondere dann von Vorteil, wenn das Tier eine gesundheitliche Beeinträchtigung aufweist. Eine Drosselung der Milchproduktion entlastet den Stoffwechsel des Tiers, was zur Stärkung des Immunsystems und somit zu einer Verbesserung des Gesundheitszustands des Tiers führen kann.

Gemäß einem weiteren erfinderischen Gedanken wird eine Melkvorrichtung gemäß Anspruch 16 zur Durchführung eines Verfahrens nach einem der Ansprüche 1-15 vorgeschlagen. Die Melkvorrichtung weist eine Melkeinrichtung auf. Insbesondere handelt es sich bei der Melkeinrichtung um eine robotergestützte Melkeinrichtung. Die Melkvorrichtung weist des Weiteren Mittel zur Tieridentifikation auf. Hierbei kann es sich um herkömmliche, bekannte Mittel zur Tieridentifikation handeln. Die Melkvorrichtung weist des Weiteren Mittel zur Erfassung einer während eines Melkvorgangs ermolkenen Milchmenge auf. Des Weiteren ist eine Steuereinrichtung vorgesehen, welche zur Steuerung der erfindungsgemäßen Melkeinrichtung geeignet und bestimmt ist.

Insbesondere weist die Steuerung einen Computer umfassend einen Speicher mit einem darin hinterlegten Computerprogramm und einen digitalen Prozessor auf.

Gemäß einem noch weiteren erfinderischen Gedanken wird ein Computerprogrammprodukt gemäß Anspruch 18 vorgeschlagen, welches zur Durchführung des Verfahrens nach einem der Ansprüche 1-15 bestimmt und eingerichtet ist.

Des Weiteren wird ein maschinenlesbares Speichermedium gemäß Anspruch 19, auf dem ein Computerprogrammprodukt gemäß Anspruch 18 gespeichert ist, vorgeschlagen.

Weitere Vorteile und Einzelheiten der Erfindung werden anhand des in der Zeichnung dargestellten Ausführungsbeispiels erläutert, ohne dass der Gegenstand der Erfindung auf dieses Ausführungsbeispiel beschränkt ist. Es zeigen:

Fig. 1:     schematisch eine Melkvorrichtung zur Durchführung des erfindungsgemäßen Verfahrens und

Fig. 2:     schematisch einen Verlauf einer Milchleistung über die Zeit.

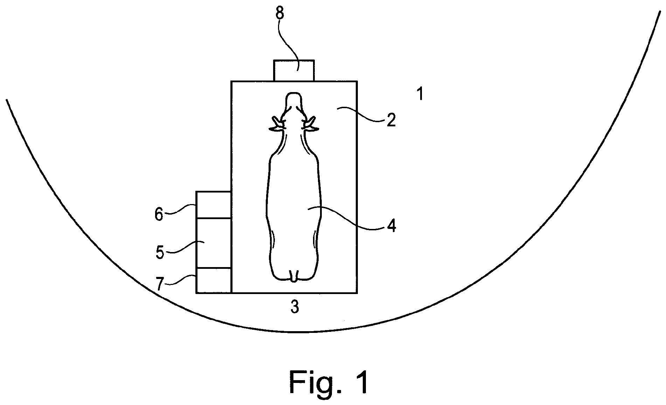

Fig. 1 zeigt schematisch einen Melkbereich 1 mit einem Melkplatz 2. Der Melkplatz 2 wird vom Tier 4 über den Eingangsbereich 3 betreten und verlassen.

Im Bereich des Melkplatzes 2, in dem dargestellten Ausführungsbeispiel im Kopfbereich des Melkplatzes, sind Mittel zur Tieridentifikation 8 vorgesehen. Damit werden die einzelnen Tiere einer Identifikation unterzogen. Die Mittel zur Tieridentifikation 8 arbeiten vorzugsweise berührungslos. Sie weisen insbesondere eine Sende- und/oder Empfangseinheit auf. Mittels der Identifikationsmittel 8 werden die von den Tieren getragenen Tieridentifikationsmittel, in denen tierindividuelle Kenngrößen bzw. Daten hinterlegt sind, ausgelesen und an bspw. ein Herdenmanagementsystem übergeben. Das Herdenmanagementsystem ist signaltechnisch auch mit einer Steuereinrichtung 6 zur Steuerung der Melkeinrichtung 5 am Melkplatz 2 verbunden. Das Herdenmanagementsystem kann auch ein Teil der Steuereinrichtung 6 sein. Es ist jedoch nicht zwingend, dass ein Herdenmanagementsystem vorhanden sein muss, es ist jedoch vorteilhaft, wenn dieses zur Verfügung steht. Die Anordnung der Mittel zur Tieridentifikation im Kopfbereich des Melkplatzes stellt eine Ausführungsform dar. Diese können auch beispielsweise im Gangbereich zum Melkplatz angeordnet sein. Während eines Melkvorgangs mittels einer Melkeinrichtung 5 wird die ermolkene Milchmenge erfasst, wozu Mittel 7 vorgesehen sind.

Betritt ein Tier 4 den Melkplatzbereich 2, so wird dieses durch die Mittel zur Tieridentifikation 8 identifiziert. Die Identifikationsinformation wird vorzugsweise an ein Herdenmanagementsystem gegeben. Ist im Herdenmanagementsystem hinterlegt und das entsprechende Signal an die Steuerungseinrichtung 6 gesendet worden, dass zu dem konkreten Tier 4 ein Melkvorgang durchgeführt werden soll, so werden die nicht dargestellten Melkbecher an die Zitzen des Tiers angesetzt und der Melkvorgang durchgeführt.

In dem Herdenmanagementsystem ist auch hinterlegt, ob das Tier nach einem Melkvorgang entsprechend dem erfindungsgemäßen Verfahren gemolken werden soll. Ist dies der Fall, so wird dies vor Beginn des Melkvorganges der Steuereinrichtung 6 mitgeteilt. Während des Melkvorgangs wird die ermolkene Milchmenge ermittelt. Bei den Tieren, die mit dem erfindungsgemäßen Verfahren zu melken sind, findet vorzugsweise ein kontinuierlicher Abgleich der ermolkenen Milchmenge mit einer vorzugsweise tierindividuell bestimmten Zielmilchmenge statt. Entspricht die ermolkene Milchmenge im Wesentlichen der Zielmilchmenge, so wird der Melkvorgang beendet. Um einen Tierschutz zu gewährleisten und ein für das Tier gesundheitsschädigendes Melken zu verhindern, können zusätzlich Abbruchkriterien definiert werden, die ein Melkende vor einem Erreichen der Zielmilchmenge einleiten.

Die erfindungsgemäße Verfahrensführung kann auch für Melkvorgänge während der Laktationsperiode angewendet werden, wobei die Zielmilchmenge abhängig vom Laktationsstand des Tiers ist. Das erfindungsgemäße Verfahren wird im Zusammenhang mit dem angestrebten Trockenstellen des Tiers verwendet.

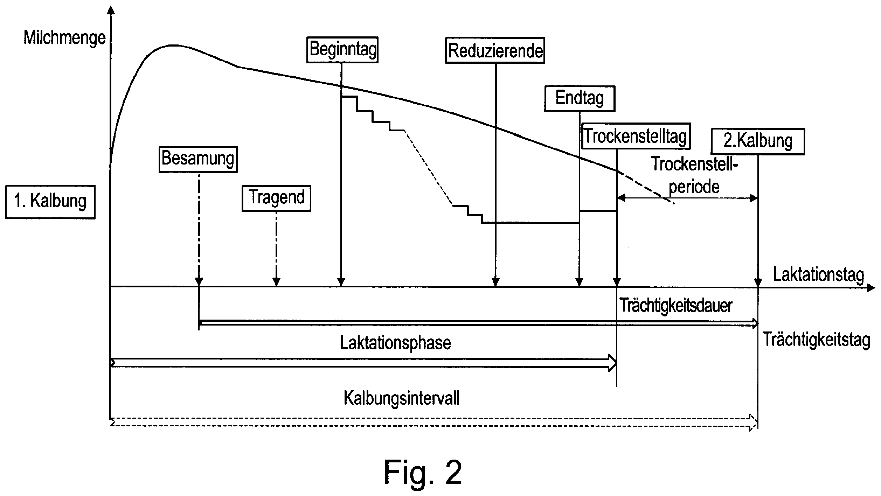

Fig. 2 zeigt einen schematischen Verlauf der Milchleistung während einer Laktation in Abhängigkeit von der Zeit. Eine Laktation ist der Zeitraum nach einer Kalbung. Der nullte Laktationstag ist der Tag der Kalbung. Von da an werden die Laktationstage gerechnet. Kurz nach einer Kalbung hat ein Tier die höchste Milchleistung. Im Laufe einer Laktation gibt ein Tier immer weniger Milch ab, was aus dem fallenden Verlauf der Kurve ersichtlich wird. Der Milchfluss (Kilogramm pro Minute) wird hierbei immer geringer.

Während der der Laktation erfolgt wenigstens eine Besamung des Tiers. In einer Trächtigkeitsuntersuchung wird festgestellt, ob das Tier tragend ist und welche Besamung erfolgreich war. Der nullte Trächtigkeitstag ist der Tag der Besamung. Von diesem Tag an gerechnet werden die Tage auch Trächtigkeitstage für das Tier genannt. Vor der nächsten Kalbung erfolgt in der Regel ein Trockenstellen des Tiers. Ab dem Trockenstelltag wird das Tier für einige Tage vor der nächsten Kalbung nicht mehr gemolken. Diese Trockenstellperiode führt zu einer Verbesserung der Energiebilanz des Tiers, so dass es gesünder in die Kalbung und den Anfang der nächsten Laktation geht. Die Laktationszahl bezeichnet die Zahl, wie oft ein Tier bereits gekalbt hat.

Der in der Fig. 2 dargestellte Verlauf der Milchproduktion kann für unterschiedliche Tiere verschieden sein. Der Verlauf kann auch in Abhängigkeit von der Laktationszahl eines Tiers veränderlich sein.

Aus dem in der Fig. 2 dargestellten Verlauf ist erkennbar, dass am Trockenstelltag die Milchproduktion sprunghaft auf Null reduziert wird, was dadurch bedingt ist, dass ab dem Trockenstelltag keine Melkvorgänge mehr durchgeführt werden. Nach den bisherigen Verfahren wird das Euter eines Tiers während der Laktation leer gemolken. Durch das Leermelken wird das Euter maximal angereizt, weitere Milch zu produzieren, so dass ein theoretischer weiterer Verlauf der Laktation möglich wäre, wie dies vorstehend in der Fig. 2 in der Trockenstellperiode gestrichelt dargestellt ist.

Nach dem erfindungsgemäßen Verfahren wird ein Tier gemolken, wobei der Melkvorgang beendet wird, sobald eine vorgegebene Zielmilchmenge erreicht worden ist oder die klassischen Abnahmeverfahren aus Tierschutzgründen eher greifen.

Ist der Trockenstelltag bekannt, so wird ab einem Beginntag, der vor einem Trockenstelltag liegt, mit einer Zielmilchmenge gemolken. Die Zielmilchmenge ist eine Milchmenge, die geringer ist als eine mögliche zu erzielende Milchmenge. Die Zielmilchmenge wird zumindest für den Beginntag aus historischen Daten ermittelt. Hierzu kann auf geeignete Verfahren, insbesondere Schätzverfahren zurückgegriffen werden. Wird das Tier nach dem erfindungsgemäßen Verfahren gemolken und die Zielmilchmenge im Laufe der Tage reduziert, so sind die Milchproduktion und der Euterinnendruck am Trockenstelltag so gering, dass die Anwendung von Antibiotika unnötig oder zumindest in erheblich geringerem Umfang verwendet wird. Das Verfahren fördert die Involution der Milchdrüsen. Die langsame Abnahme der Milchproduktion führt auch zu einer schonenderen Veränderung der Fütterungsnotwendigkeit, die das Tier nicht mehr so viel Energie aus dem Futter für die Milchproduktion benötigt. Das Tier gerät somit nicht so leicht ins energetische Ungleichgewicht.

In der Fig. 2 ist schematisch zwischen Beginntag und Reduzierende der Verlauf der Zielmilchmenge dargestellt. Ab einem Beginntag, der vorzugsweise in Abhängigkeit vom Trockenstelltag definiert wird, wird das Tier mit der Zielmilchmenge gemolken. Bis zum Beginntag wird das Tier nach dem klassischen Melkverfahren gemolken. Mit dem Beginntag wird vorzugsweise die durchschnittliche Tagesmilchmenge des Tiers aus den historischen aufgezeichneten Gemelksmengen der vorangegangenen Tage berechnet. Vorzugsweise wird die Gemelksmenge der vorangegangenen 7 (sieben) Tage berücksichtig. In Kenntnis der historischen Daten wird ein erster Reduzierschritt vorgenommen, durch den die zu erzielende Zielmilchmenge am Beginntag definiert wird.

Die Zielmilchmenge für einen einzelnen Melkvorgang wird aus der Tages-Zielmilchmenge und der Zeit berechnet, die seit dem vorigen Melken vergangen ist, wobei ein Schätzwert angenommen werden kann, wenn der Abstand zur letzten aufgezeichneten Melkung nicht plausibel ist. Es besteht auch die Möglichkeit, dass Zielmilchmengen für jeweilige Melkvorgänge eines Tages direkt definiert werden.

Aus der Fig. 2 ist ersichtlich, dass die Zielmilchmenge, die der tatsächlichen ermolkenen Milchmenge entspricht, stufenweise ab dem Beginntag bis zu einem Reduzierende abnimmt. Hierbei handelt es sich um eine bevorzugte Ausführungsform des Verfahrens. Es ist nicht zwingend, dass eine Reduktion der Zielmilchmenge von Tag zu Tag erfolgt. Tritt bspw. der Fall ein, dass die erfasste Milchmenge nicht oder unvollständig gespeichert wurde, so wird der darauf folgende Melkvorgang mit der letzten Zielmilchmenge fortgesetzt. Der Änderungswert M kann auch variabel sein, so dass bspw. im Verlauf der Laktation der Änderungswert M kleiner wird. Dies bedeutet, dass die Differenz zwischen den Zielmilchmengen aufeinanderfolgender Tage geringer wird.

Während des Melkvorgangs wird die ermolkene Milchmenge erfasst. Wird die erfasste Milchmenge zitzenindividuell ermittelt, so kann auch die Zielmilchmenge zitzenindividuell eingestellt werden.

Eine Reduktion der Zielmilchmenge erfolgt bis zu einem vorgegebenen Reduzierende. Zwischen dem Reduzierende und einem Endtag, der vor dem Trockenstelltag liegt, wird vorzugsweise mit einer konstanten Zielmilchmenge gemolken. Das Reduzierende und der Endtag werden vorzugsweise in Abhängigkeit von der Trächtigkeitsdauer des Tiers eingestellt. Der Endtag sollte kurz vor dem geplanten Trockenstelltag liegen. Zwischen dem Endtag und dem Trockenstelltag wird das Tier vollständig ausgemolken. Hierdurch soll sichergestellt werden, dass das Euter vor dem Trockenstellen leergemolken wurde. Dies ist insbesondere dann zweckmäßig, wenn eine "versiegelnde" Substanz in das Euter eingeführt wird. Vorzugsweise wird zwischen dem Endtag und dem Trockenstelltag das Tier zwei- bis dreimal vollständig ausgemolken, damit sichergestellt ist, dass die Milchproduktion tatsächlich reduziert wurde. Die bei einem vollständigen Melkvorgang erfasste Milchmenge kann auch als Überprüfung der Wirksamkeit der Verfahrensführung mit der Zielmilchmenge genutzt werden. In Abhängigkeit davon, welche tatsächliche Milchmenge beim vollständigen Melkvorgang vorliegt, kann beim betreffenden Tier, der Tiergruppe oder der Herde eine Anpassung des Änderungswerts M ermöglicht werden.

Diese Verfahrensführung hat insbesondere den Vorteil, dass die Eutergesundheit gesteigert wird. Die Verwendung antibiotischer Trockenstellepräparate kann im Wesentlichen vermieden werden.

Aus der Darstellung nach Fig. 2 ist ersichtlich, dass zu Beginn der Laktation eine große Steigung der Milchproduktion des Tiers verzeichnet werden kann. In dieser frühen Laktationsphase, in der auch das Kolostrum vorliegt, ist der Energiebedarf des Tiers sehr hoch. Das Kolostrum oder auch Biestmilch genannt, wird in zahlreichen Ländern als nicht verkehrsfähige Milch betrachtet. Es ist daher nicht zwingend, dass ab dem Tag der Kalbung eine hohe Milchproduktion einsetzt. Wünschenswert wäre es, wenn die hohe Milchproduktion frühestens nach Ende der Kolostrumperiode eintritt, was meistens bei Kühen ab dem fünften Laktationstag der Fall wäre.

In der frühen Laktation ist der Energiebedarf des Tieres für den starken Anstieg der Milchleistung sehr hoch und kann unter Umständen nicht durch das aufgenommene Futter gedeckt werden. Um das Ketoserisiko zu verringern, wird die Milchproduktion begrenzt.

Vorstehend wurde dargelegt, dass ab einem Beginntag die Zielmilchmenge reduziert wird. Das Verfahren ist auch vorteilhaft in der Beginnphase der Laktation. Mit der Kalbung, das heißt ab dem nullten Laktationstag oder einem späteren Tag, wird das Tier mit einer Zielmilchmenge gemolken, wobei an jedem weiteren Tag eine Erhöhung der Zielmilchmenge vorgenommen wird. Die Erhöhung der Zielmilchmenge kann bspw. ein bestimmter, einstellbarer Prozentsatz des Vortageswerts sein. Es besteht auch die Möglichkeit, dass die Erhöhung um einen bestimmten Betrag erfolgt. Die Erhöhung in Abhängigkeit vom Laktationsstand kann konstant oder auch variabel sein.

Das Verfahren zum Melken eines Tiers mit reduzierter Zielmilchmenge kann auch für eine Drosselung der Milchproduktion während der Laktation erfolgen. Es ist bspw. festgestellt worden, dass die Nahrungsaufnahme des Tiers gestört ist oder das Tier aus anderen Gründen mit einer reduzierten Zielmilchmenge gemolken werden soll, so kann ab einem Beginntag bis zu einem vorgegebenen Reduzierende während der Laktation das Tier mit einer reduzierten Zielmilchmenge gemolken werden.

Durch das erfindungsgemäße Verfahren wird ein schonendes Melken eines Tiers erreicht. Des Weiteren kann auf antibiotische Trockenstellpräparate im Wesentlichen verzichtet werden. Der Gesundheitszustand des Tiers wird durch das erfindungsgemäße Verfahren gesteigert.

Bezugszeichenliste

1    Melkbereich
2    Melkplatz

3    Eingangsbereich des Melkplatzes
4    Tier
5    Melkeinrichtung
6    Steuereinrichtung
7    Mittel zur Erfassung einer ermolkene Milchmenge
8    Mittel zur Tieridentifikation

**Patentansprüche**

1. Verfahren zum Melken eines milchabgebenden Tieres, insbesondere einer Kuh, umfassend die folgenden Schritte:

   Bestimmung einer Zielmilchmenge, welche geringer ist als eine mögliche zu erwartende Milchmenge, Durchführen eines Melkvorgangs;
   Ermittlung einer ermolkenen Milchmenge während eines Melkvorgangs;
   Vergleich der ermolkenen Milchmenge mit der Zielmilchmenge;
   Beendigung des Melkvorgangs, wenn die ermolkenen Milchmenge im Wesentlichen der Zielmilchmenge entspricht, **dadurch gekennzeichnet, dass** ein Beginntag, der vor einem Trockenstelltag liegt, bestimmt und von dem an mit dieser Zielmilchmenge gemolken wird.

2. Verfahren nach Anspruch 1, bei dem die Zielmilchmenge zumindest für den Beginntag aus historischen Daten ermittelt wird.

3. Verfahren nach Anspruch 2, bei dem die Zielmilchmenge zumindest für den Beginntag tierindividuell ermittelt wird.

4. Verfahren nach einem der Ansprüche 1 bis 3, bei dem die Zielmilchmenge für jeden einzelnen Melkvorgang bestimmt wird.

5. Verfahren nach einem der Ansprüche 1 bis 3, bei dem die Zielmilchmenge für jeden Tag bestimmt wird.

6. Verfahren nach einem der Ansprüche 1 bis 5, bei dem vor einem Melkvorgang eine Identifikation des zu melkenden Tieres erfolgt.

7. Verfahren nach einem der Ansprüche 1 bis 6, bei dem die Zielmilchmenge für einen auf einen Melkvorgang folgenden Melkvorgang der Zielmilchmenge des vorhergehenden Melkvorgangs entspricht, wenn keine oder unvollständige Daten über die ermolkene Milchmenge des vorherigen Melkvorgangs vorliegen.

8. Verfahren nach einem der Ansprüche 1 bis 7, bei dem die Berechnung der Zielmilchmenge eines einzelnen Melkvorgangs aus der Tages-Zielmilchmenge angenommene Werte für die Berechnung verwendet, wenn der aufgezeichnete vorangegangene Melkvorgang keinen plausiblen Zeitabstand hat.

9. Verfahren nach einem der Ansprüche 1 bis 8, bei dem der Beginntag in Abhängigkeit von einem geplanten Trockenstelltag des Tieres, festgelegt wird.

10. Verfahren nach einem der Ansprüche 1 bis 9, bei dem zumindest ab dem auf den Beginntag folgenden Tag die Zielmilchmenge aus einer Referenzmenge um einen Änderungswert M verändert wird.

11. Verfahren nach Anspruch 10, bei dem der Änderungswert M konstant ist.

12. Verfahren nach Anspruch 10, bei dem der Änderungswert M eine insbesondere von einer Zeitspanne zwischen Beginntag und Trockenstelltag und/oder Laktationsstand abhängige Größe ist.

13. Verfahren nach Anspruch 10, 11, oder 12, bei dem der Änderungswert M tierindividuell, insbesondere zitzenindividuell ist.

14. Verfahren nach einem der Ansprüche 9 bis 13, bei dem zumindest ab dem auf den Beginntag folgenden Tag die Zielmilchmenge wenigstens in Abhängigkeit von einer Zeitspanne zwischen dem Beginntag und dem Trockenstelltag bestimmt wird.

**15.** Verfahren nach einem der Ansprüche 9 bis 14, bei dem die Melkvorgänge mit einer Zielmilchmenge bis zu einem Endtag, der vor dem Trockenstelltag liegt, durchgeführt werden, wobei in der Zeitspanne zwischen dem Endtag und dem Trockenstelltag wenigstens einmal vollständig ausgemolken wird.

**16.** Melkvorrichtung zur Durchführung eines Verfahrens nach einem der Ansprüche 1 bis 15 umfassend:

eine Melkeinrichtung (5);
Mittel zur Tieridentifikation (8);
Mittel (7) zu Erfassung einer während eines Melkvorgangs ermolkenen Milchmenge;
eine Steuereinrichtung (6) zur Steuerung der Melkeinrichtung (5) eingerichtet zur Durchführung eines Verfahrens nach einem der Ansprüche 1 bis 15.

**17.** Melkvorrichtung nach Anspruch 16, wobei die Steuerung einen Computer, umfassend:

einen Speicher mit einem darin hinterlegten Computerprogramm, und
einen digitalen Prozessor

aufweist.

**18.** Computerprogrammprodukt, welches zur Durchführung eines Verfahrens nach einem der Ansprüche 1 bis 15 bestimmt und eingerichtet ist.

**19.** Maschinenlesbares Speichermedium, auf dem ein Computerprogrammprodukt nach Anspruch 18 gespeichert ist.

**Claims**

**1.** A method for milking a milk-producing animal, especially a cow, comprising the following steps: determining a target quantity of milk that is smaller than a possible quantity of milk to be expected, carrying out a milking operation; ascertaining a milked quantity of milk during a milking operation; comparing the milked quantity of milk with the target quantity of milk; ending the milking operation when the milked quantity of milk substantially corresponds to the target quantity of milk, in which a start day, before a dry-off day, is determined and milking is carried out with a target quantity of milk from that day.

**2.** The method as claimed in claim 1, in which the target quantity of milk at least for the start day is ascertained from historic data.

**3.** The method as claimed in claim 2, in which the target quantity of milk at least for the start day is ascertained in an animal-specific manner.

**4.** The method as claimed in any of claims 1 to 3, in which the target quantity of milk for each individual milking operation is determined.

**5.** The method as claimed in any of claims 1 to 3, in which the target quantity of milk for each day is determined.

**6.** The method as claimed in any of claims 1 to 5, in which the animal to be milked is identified before a milking operation.

**7.** The method as claimed in any of claims 1 to 6, in which the target quantity of milk for a milking operation following one milking operation corresponds to the target quantity of milk of the preceding milking operation when there is no data or incomplete data about the milked quantity of milk of the previous milking operation.

**8.** The method as claimed in any of claims 1 to 7, in which the calculation of the target quantity of milk of an individual milking operation from the daily target quantity of milk uses assumed values for the calculation when the previous milking operation recorded does not have a plausible time interval.

**9.** The method as claimed in any of claims 1 to 8, in which the start day is defined depending on a planned dry-off day for the animal.

10. The method as claimed in any of claims 1 to 9, in which, at least from the day following the start day, the target quantity of milk is changed by a change value M from a reference quantity.

11. The method as claimed in claim 10, in which the change value M is constant.

12. The method as claimed in claim 10, in which the change value M is a variable dependent especially on a period of time between start day and dry-off day and/or lactation state.

13. The method as claimed in claim 10, 11, or 12, in which the change value M is animal-specific, especially teat-specific.

14. The method as claimed in any of claims 9 to 13, in which, at least from the day following the start day, the target quantity of milk is determined at least depending on a period of time between the start day and the dry-off day.

15. The method as claimed in any of claims 9 to 14, in which the milking operations with a target quantity of milk are carried out up to an end day, which is before the dry-off day, with the animal being completely milked dry at least once in the period of time between the end day and the dry-off day.

16. A milking apparatus for carrying out a method as claimed in any of claims 1 to 15, comprising:

    a milking device (5);
    means for animal identification (8);
    means (7) for capturing a quantity of milk milked during a milking operation;
    a control device (6) for controlling the milking device (5).

17. The milking apparatus as claimed in claim 16, wherein the control system comprises a computer comprising:

    a memory containing a computer program stored therein and
    a digital processor.

18. A computer program product which is intended and set up for carrying out a method as claimed in any of claims 1 to 15.

19. A machine-readable storage medium on which a computer program product as claimed in claim 18 is saved


**Revendications**

1. Procédé pour traire un animal produisant du lait, notamment une vache, comprenant les étapes suivantes : spécification d'une quantité de lait cible, laquelle est inférieure à une quantité de lait possible à attendre ;détermination d'une quantité de lait tirée pendant une opération de traite; comparaison de la quantité de lait tirée avec la quantité de lait cible; terminaison de l'opération de traite lorsque la quantité de lait tirée correspond sensiblement à la quantité de lait cible, **caractérisé en ce que** un jour de début, qui se trouve avant un jour de tarissement, est spécifié et la traite est effectuée à partir de celui-ci avec la quantité de lait cible.

2. Procédé selon la revendication 1, avec lequel la quantité de lait cible est déterminée à partir de données historiques au moins pour le jour de début.

3. Procédé selon la revendication 2, avec lequel la quantité de lait cible est déterminée individuellement par animal au moins pour le jour de début.

4. Procédé selon l'une des revendications 1 à 3, avec lequel la quantité de lait cible est spécifiée pour chaque opération de traite individuelle.

5. Procédé selon l'une des revendications 1 à 3, avec lequel la quantité de lait cible est spécifiée pour chaque jour.

6. Procédé selon l'une des revendications 1 à 5, avec lequel une identification de l'animal à traire est effectuée avant une opération de traite.

7. Procédé selon l'une des revendications 1 à 6, avec lequel la quantité de lait cible pour une opération de traite qui suit une opération de traite correspond à la quantité de lait cible de l'opération de traite précédente lorsqu'il n'existe aucune donnée, ou des données insuffisantes, à propos de la quantité de lait tirée de l'opération de traite précédente.

8. Procédé selon l'une des revendications 1 à 7, avec lequel le calcul de la quantité de lait cible d'une opération de traite individuelle utilise pour le calcul des valeurs supposées à partir de la quantité de lait cible journalière lorsque l'opération de traite précédente enregistrée ne présente pas un intervalle de temps plausible.

9. Procédé selon l'une des revendications 1 à 8, avec lequel le jour de début est fixé en fonction d'un jour de tarissement prévu de l'animal.

10. Procédé selon l'une des revendications 1 à 9, avec lequel, au moins à partir du jour qui suit le jour de début, la quantité de lait cible est modifiée d'une valeur de modification M à partir d'une valeur de référence.

11. Procédé selon la revendication 10, avec lequel la valeur de modification M est constante.

12. Procédé selon la revendication 10, avec lequel la valeur de modification M est une grandeur qui dépend notamment d'une période entre le jour de début et le jour de tarissement et/ou d'un état de lactation.

13. Procédé selon la revendication 10, 11 ou 12, avec lequel la valeur de modification M est individuelle à un animal, notamment individuelle à une mamelle.

14. Procédé selon l'une des revendications 9 à 13, avec lequel, au moins à partir du jour qui suit le jour de début, la quantité de lait cible est spécifiée au moins en fonction d'une période entre le jour de début et le jour de tarissement.

15. Procédé selon l'une des revendications 9 à 14, avec lequel les opérations de traite sont effectuées avec une quantité de lait cible jusqu'à un jour de fin, qui se trouve avant le jour de tarissement, une traite jusqu'à tarissement étant effectuée au moins une fois entre le jour de fin et le jour de tarissement.

16. Arrangement de traite destiné à mettre en œuvre un procédé selon l'une des revendications 1 à 15, comprenant : un dispositif de traite (5) ; des moyens d'identification des animaux (8) ; des moyens (7) pour détecter une quantité de lait tirée pendant une opération de traite ; un dispositif de commande (6) destiné à commander le dispositif de traite (5), conçu pour mettre en œuvre un procédé selon l'une des revendications 1 à 15.

17. Arrangement de traite selon la revendication 16, la commande comprenant un ordinateur comportant : une mémoire sur laquelle est stocké un programme informatique, et un processeur numérique.

18. Produit de programme informatique, lequel est spécifié et conçu pour mettre en œuvre un procédé selon l'une des revendications 1 à 15.

19. Support d'enregistrement lisible par machine, sur lequel est enregistré un produit de programme informatique selon la revendication 18.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3609275 A1
- EP 0534565 B1
- DE 2844562 B1
- WO 2006068568 A1
- EP 1125492 A2